# EUROPEAN PATENT SPECIFICATION

(11) **EP 3 388 333 B1**
(45) Date of publication and mention of the grant of the patent: **19.08.2020**
(21) Application number: 18166816.1
(22) Date of filing: 11.04.2018
(51) Int. Cl.: B64C 9/16, B64C 9/22, B64C 9/32, B64C 9/34, B64C 5/10, B64C 3/38

(54) **STOPPING DEVICE, MOVING MECHANISM AND AIRCRAFT**
STOPPVORRICHTUNG, BEWEGUNGSMECHANISMUS UND LUFTFAHRZEUG
DISPOSITIF D'ARRÊT, MÉCANISME DE DÉPLACEMENT ET AÉRONEF

(30) Priority: 11.04.2017 CN 201710233077
(43) Date of publication of application: 17.10.2018
(73) Proprietor: Airbus (Beijing) Engineering Centre Company Limited, Beijing 101312 (CN)
(72) Inventor: SUN, Yumin, Beijing 101312 (CN)
(74) Representative: Abel & Imray

(56) References cited:
- US-A- 4 497 461
- US-A1- 2009 321 581
- US-A1- 2011 277 672
- US-A1- 2014 037 873
- US-A1- 2016 185 455

## Description

### FIELD OF THE INVENTION

This application relates to an aircraft comprising a stopping device, and in particular to an aircraft comprising a stopping device which is capable of reliably reducing a dynamic load in collision in a case that a drive connection structure of the moving mechanism fails.

### BACKGROUND OF THE INVENTION

In an aircraft, such as an airplane, a variety of different moving components are provided for achieving respective functions. For example, these moving components include various moving airfoils arranged on wings, such as flaps for obtaining a larger lift and a better maneuvering capability at a low speed (the flaps may be classified as inboard flaps and outboard flaps and may also be classified as leading slats and trailing flaps, etc.), an aileron for controlling a transverse tilting attitude of an airplane, an airbrake for increasing resistance to reduce the speed of the airplane and the like.

In use, there is a probability that a moving component may fail, for example, there is a probability that a drive connection structure (for example, a transmission rod) of the moving component may fail (for example, break). Therefore, it may be considered to provide a stopping device for the moving component to limit a moving range of the moving component when the drive connection structure of the moving component fails, so as to, for example, prevent a fragile and important wing body of the moving component from colliding with a stationary structure, (for example, a framework structure of a wing) for mounting the moving component, of the aircraft and thus prevent damaging the wing body. US4497461 describes a snubbing apparatus for an aircraft control surface actuator, the snubbing apparatus comprising a snubber comprising a fixed member and a movable member, with a variable volume chamber therebetween. US2011/0277672 describes an aircraft tray table stop assembly. US2014/0037873 describes various digital flexural materials.

However, the inventor still found that there is room for improving the stopping device, for example, there is a need for improving a buffer performance of the stopping device, i.e., reducing a dynamic load factor of the stopping device.

Here, it is to be noted that, the technical contents provided in this section are intended to assist understanding of the present application by the person skilled in the art, and do not necessarily constitute the prior art.

### SUMMARY OF THE INVENTION

A general summary rather than a comprehensive presentation of full scope of the present application or all of the features of the present application is provided in this section.

One object of the present application is to provide a stopping device which can be formed simply and reliably and has an improved buffer performance.

Another object of the present application is to provide a stopping device which can facilitate reducing a dynamic load factor and thus reducing a dynamic load in collision.

Still another object of the present application is to provide a stopping device which has a buffer region with a density gradually increased in a collision direction.

Still another object of the present application is to provide a stopping device which has a stopper with reduced size and weight.

Still another object of the present application is to provide a stopping device which can achieve stopping within a small space.

Other objects of the present application are to provide a moving mechanism including the stopping device described above and an aircraft including the moving mechanism described above.

For achieving one or more of the above objects, according to an aspect of the present application, there is provided an aircraft comprising a moving mechanism, a stationary structure of the aircraft and a stopping device for the moving mechanism . The moving mechanism comprises a moving airfoil and a drive connection structure. The moving mechanism is connected to the stationary structure so as to allow the moving mechanism to move relative to the stationary structure, the stopping device includes a first stopper provided at the moving mechanism and a second stopper provided at the stationary structure, the stopping device is configured such that, when a drive connection structure of the moving mechanism is normal, the first stopper does not abut against the second stopper, characterized in that when the drive connection structure fails, the first stopper is adapted to abut against the second stopper so as to limit a moving range of the moving mechanism; and at least one of the first stopper and the second stopper includes a buffer region which is made by modifying its meso-structure and thus has a reduced density to thereby be adapted to reduce a dynamic load generated when the first stopper collides with the second stopper.

In the above aircraft, the buffer region may have a meso-structure in a three-dimensional lattice form.

In the above aircraft, the buffer region may have a meso-structure in a three-dimensional lattice form achieved by a three-dimensional printing process.

In the above aircraft, the buffer region may be configured to include a plurality of layers having different meso-structures and arranged from a collision side to a base side, and optionally the closer a layer is to the collision side, the smaller a cross sectional dimension of a connecting rod of a lattice cell in the layer is.

In the above aircraft, each of the layers may include a first sub-layer and a second sub-layer formed by arranging a plurality of truncated regular or oblique hexagonal pyramid lattice cells side by side, such that an imaginary small top face of a truncated regular or oblique hexagonal pyramid lattice cell of the first sub-layer is connected with an imaginary small top face of a corresponding truncated regular or oblique hexagonal pyramid lattice cell of the second sub-layer or that an imaginary large top face of a truncated regular or oblique hexagonal pyramid lattice cell of the first sub-layer is connected with an imaginary large top face of a corresponding truncated regular or oblique hexagonal pyramid lattice cell of the second sub-layer.

In the above aircraft, the three-dimensional lattice may be formed by stacking polyhedral lattice cells which are of multiple kinds or of one single kind and which are identically sized or differently sized.

In the above aircraft, the polyhedral lattice cell may include a truncated regular or oblique hexagonal pyramid, a regular or oblique hexagonal prism, a regular or oblique triangular prism and a regular or oblique hexahedron.

In the above aircraft, the buffer region may have a meso-structure in a three-dimensional porous form.

In the above aircraft, the buffer region may have a meso-structure in a three-dimensional porous form achieved by a three-dimensional printing process or a metal powder or particle sintering process.

In the above aircraft, the buffer region may be configured to include a plurality of layers having different meso-structures and arranged from a collision side to a base side, and the closer a layer is to the collision side, the greater the porosity of the layer is.

In the above aircraft, the buffer region may be configured such that the density of the buffer region is increased step by step or substantially continuously from a collision side to a base side.

In the above aircraft, the buffer region may be configured to include a plurality of layers having different meso-structures and arranged from a collision side to a base side, such that, the closer a layer is to the collision side, the smaller the density of the layer is.

In the above aircraft, the at least one of the first stopper and the second stopper further may include a stiff region having a greater density, and the stiff region and the buffer region are made of the same material.

In the above aircraft, the buffer region may be arranged at a collision side part of the at least one of the first stopper and the second stopper.

In the above aircraft, the stiff region may include a stiff base located at a base side part of the at least one of the first stopper and the second stopper and a stiff wall extending to the collision side part so as to surround the buffer region.

According to a merely illustrative embodiment, there is provided a moving mechanism for an aircraft. The moving mechanism may include the stopping device described above.

The moving mechanism may be a flap assembly, and the flap assembly may include a flap body and a movable support structure configured to support the flap body.

The stationary structure may include a mounting protrusion of a wing rib of the aircraft, and the first stopper may be provided at the movable support structure and the second stopper may be provided at the mounting protrusion.

The second stopper may be directly mounted to the mounting protrusion, or the second stopper may be mounted to a mounting bracket bridging two adjacent mounting protrusions so as to be indirectly mounted to the mounting protrusions.

-

According to the present application, the buffer region may be made in the stopper of the stopping device by modifying the meso-structure of the stopper, thus, a stopping device having an improved buffer performance can be simply and reliably formed, and thereby, the dynamic load factor of the stopping device can be advantageously reduced, and further the dynamic load of the stopping device in collision can be reduced. Particularly, by gradually increasing the density of the buffer region in the collision direction (the density is in ladder distribution), the dynamic load factor of the stopping device can be effectively reduced. In addition, making the buffer region in the stopper of the stopping device by modifying the meso-structure of the stopper can reduce the dimension and the weight of the stopper of the stopping device. In addition, since the buffer region having a density ladder (stepwise) distribution may be made in the stopper of the stopping device by modifying the meso-structure of the stopper and the stopping device may be further provided with a stiff region, the moving stroke (rotating angle) of the moving mechanism when opposite collision parts collide can be reduced while an improved buffer performance is provided thereby achieving the so called stopping within a small space.

### BRIEF DESCRIPTION OF THE DRAWINGS

Features and advantages of one or more embodiments of the present application can be understood more readily with reference to the following description in conjunction with the drawings in which:
Fig. 1 is a top view showing an aircraft according to the present application;
Fig. 2 is a schematic view showing a flap assembly and an associated stationary structure according to the present application;
Fig. 3 is a schematic view showing a stopping device according to the present application;
Fig. 4 is a schematic view showing a variation of the stopping device according to the present application;
Figs. 5 and 6 are respectively schematic views showing details of a second stopper and a first stopper according to the present application;
Fig. 7 is a schematic view showing another variation of the stopping device according to the present application;
Fig. 8 is a cross sectional view showing the stopper according to the present application taken along a collision direction;
Fig. 9 is a perspective view showing multiple lattice cells, arranged along the collision direction, of a first example of the lattice structure according to the present application;
Fig. 10 is a top view showing the lattice structure constituted by multiple lattice cells shown in Fig. 9;
Fig. 11 is a top view showing one lattice cell according of a first example of the lattice structure according to the present application;
Figs. 12a and 12b are respectively cross sectional views showing a connecting rod of the lattice cell according to the present application taken along line 12-12 shown in Fig. 11;
Figs. 13 and 14 are respectively a perspective view and a top view showing a second example of the lattice structure according to the present application;
Figs. 15 and 16 are respectively a perspective view and a top view showing a third example of the lattice structure according to the present application;
Figs. 17 and 18 are respectively a perspective view and a top view showing a fourth example of the lattice structure according to the present application; and
Fig. 19 is a cross sectional view showing a stopper according to an alternative embodiment of the present application taken along the collision direction.

### DETAILED DESCRIPTION

The present application is described in detail hereinafter with reference to the accompanying drawings and by means of the exemplary embodiment. The following detailed description of the present application is only for the purpose of illustration rather than limitation to the present application and the applications or usages thereof.

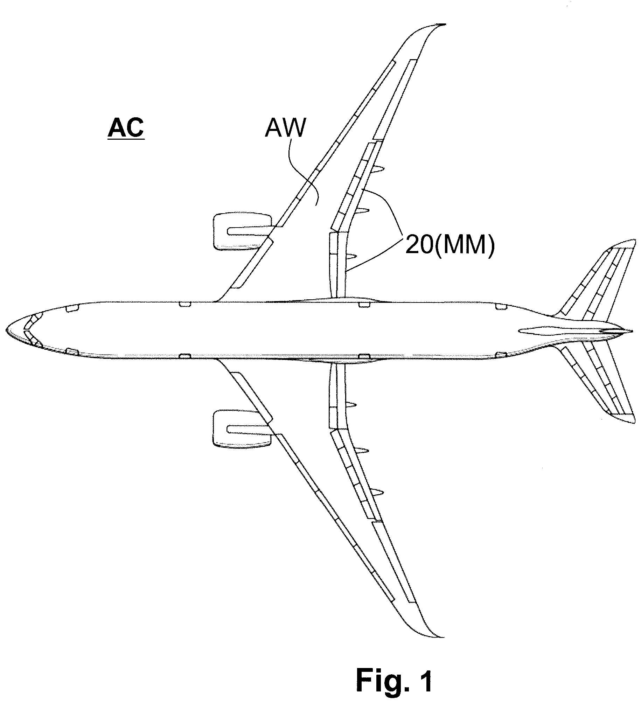

Referring to Fig. 1 (Fig. 1 is a top view showing an aircraft according to the present application), the aircraft AC according to the present application may include a moving mechanism MM. As an example, the moving mechanism MM may be a flap assembly 20, particularly a trailing flap arranged at a trailing edge of a wing AW. Here, it should be appreciated that, the moving mechanism MM may also be an aileron assembly, a rudder, an elevator, an airbrake and the like.

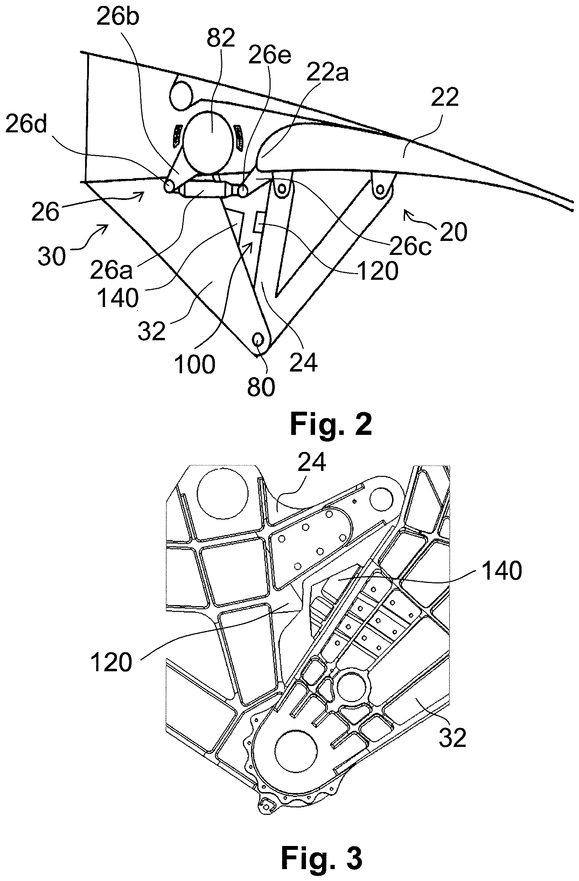

Referring to Fig. 2 (Fig. 2 is a schematic view showing a flap assembly and an associated stationary structure according to the present application), the flap assembly 20 may include a flap body 22 and a movable support structure (moving lever) 24 configured to support the flap body 22. The flap body 22 may be fixedly mounted to the movable support structure 24 so as to move integrally with the movable support structure 24.

The flap assembly 20 may be connected to a stationary structure 30 of the aircraft AC so as to allow the flap assembly 20 to move relative to the stationary structure 30. Particularly, the movable support structure 24 of the flap assembly 20 may be connected to the stationary structure 30 via a pivot shaft 80 so as to allow the flap assembly 20 to pivot relative to the stationary structure 30. Here, the stationary structure 30 may include a mounting protrusion 32 of a wing rib (i.e., an extension of the wing rib) of the aircraft AC. In addition, the flap assembly 20 may include a drive connection structure 26, and the drive connection structure 26 may include a transmission rod 26a, an actuator rod 26b of an actuator 82 and a flap rod 26c. One end of the transmission rod 26a may be pivotably connected to the actuator rod 26b via a pivot shaft 26d, and the other end of the transmission rod 26a may be pivotably connected to the flap rod 26c via a pivot shaft 26e. Thereby, when the actuator 82 rotates, the drive connection structure 26 drives the flap assembly 20 to rotate about the pivot shaft 80. When the flap assembly 20 rotates clockwise as shown in Fig. 2, the flap assembly 20 may extend outwards to be in an extended position, and when the flap assembly 20 rotates counterclockwise as shown in Fig. 2, the flap assembly 20 may be retracted inwards to be in a retracted position. In a case that the drive connection structure 26 (the transmission rod 26a, the actuator rod 26b, the flap rod 26c, the pivot shaft 26d, and/or the pivot shaft 26e) fails (for example, breaks), if no stopping device is provided, the flap assembly 20 will move freely (its moving range is not limited), thus the flap assembly 20 will move inwards excessively. Therefore, a leading end 22a of the flap body 22 may be caused to collide with a corresponding portion (trailing edge) of the stationary structure 30, thereby damaging the flap body 22 and/or a corresponding portion of the stationary structure 30.

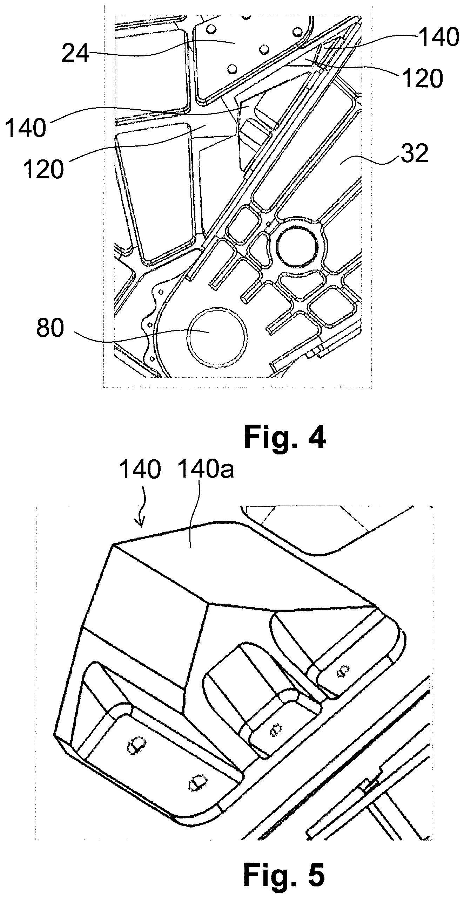

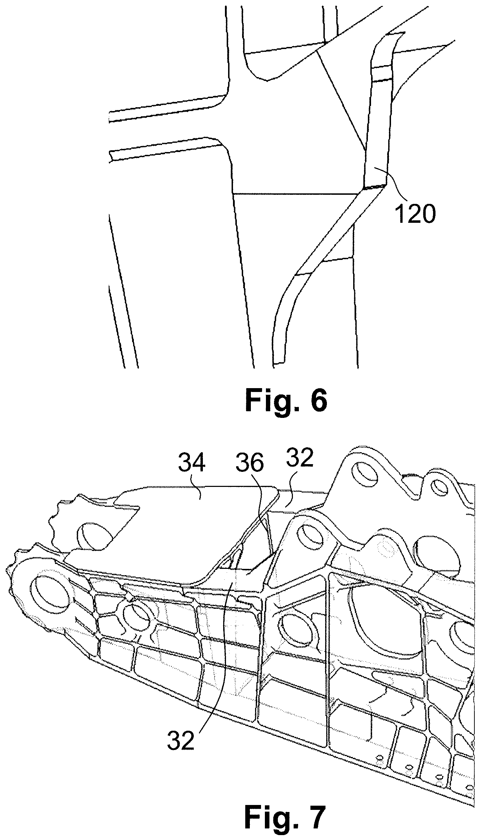

According to the present application, a stopping device 100 for the flap assembly 20 of the aircraft AC is provided. Referring also to Figs. 3, 5, and 6 (Fig. 3 is a schematic view showing a stopping device according to the present application, and Figs. 5 and 6 are respectively schematic views showing details of a second stopper and a first stopper according to the present application), the stopping device 100 may include a first stopper 120 provided at the flap assembly 20 and a second stopper 140 provided at the stationary structure 30. The second stopper 140 may include a collision surface 140a (see Fig. 5) configured to abut against the first stopper 120. Particularly, the first stopper 120 may be provided at the movable supporting structure 24 of the flap assembly 20, and the second stopper 140 may be provided at the mounting protrusion 32 of the stationary structure 30. With the first stopper 120 being provided at the movable support structure 24, it may avoid the first stopper 120 from being provided at the flap body 22 and thus affecting the aerodynamic performance of the flap assembly 20.

The stopping device 100 may be configured such that, when the drive connection structure 26 of the flap assembly 20 is normal, the first stopper 120 does not abut against the second stopper 140 (namely, they are not in contact with each other or are simply in contact with each other without pressing each other or interfering with each other), and when the drive connection structure 26 fails, the first stopper 120 is capable of abutting against the second stopper 140 so as to limit the moving range of the flap assembly 20 (particularly, restricting the excessive inward movement of the flap assembly 20, namely, restricting the flap assembly 20 from excessively rotating counterclockwise as shown in Fig. 2).

The second stopper 140 may be simply mounted right on the mounting protrusion 32 (completely directly or via a necessary gasket), this way can be referred to as a direct mounting way. In this way, the mounting structure of the stopping device can be simplified, thereby reducing the interference of the stopping device to a main body structure of the flap assembly and also facilitating weight reduction of the flap assembly. In addition, this mounting way also facilitates replacement of the second stopper 140.

Referring to Fig. 4 (Fig. 4 is a schematic view showing a variation of the stopping device according to the present application), in a variation of the stopping device 100, two pairs of stoppers may be provided along a longitudinal direction of the mounting protrusion 32. In this way, in a case that one pair of stoppers fail, the other pair of stoppers can provide the stopping function, or the two pairs of stoppers may provide the stopping function simultaneously, thereby more reliably providing the stopping effect and having a sufficient safety measure when a failure occurs.

Referring to Fig. 7 (Fig. 7 is a schematic view showing another variation of the stopping device according to the present application), in another variation of the stopping device 100, instead of the above direct mounting way, the second stopper 140 may be mounted to a mounting bracket 34 bridging two adjacent mounting protrusions 32 so as to be indirectly mounted to the mounting protrusions 32 (this way may be referred to as an indirect mounting way). In this way, the stopping length in the wingspan direction may be increased, thereby providing a reliable stopping effect. In the variation, it may further provide a supporting frame (for example, in a substantially rectangular shape) 36 located between two adjacent mounting protrusions 32 and configured to further support the mounting bracket 34. In this way, the stopper 140 may be more reliably supported and also the load transmission may be facilitated.

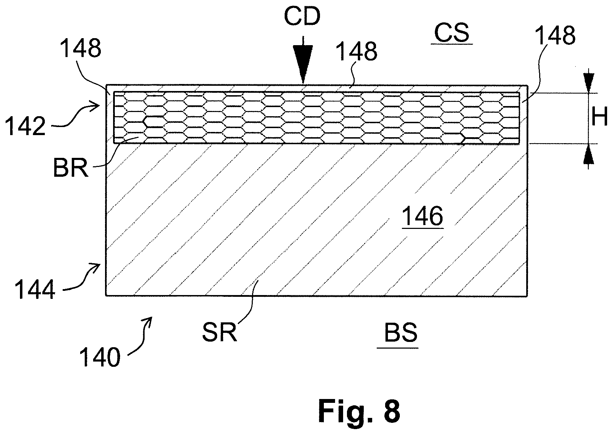

According to the present application, referring to Fig. 8 (Fig. 8 is a cross sectional view showing the stopper according to the present application taken along a collision direction), at least one of the first stopper 120 and the second stopper 140 may include a buffer region BR (a region having a meso-structure specially designed) made by modifying its meso-structure (a structure between a macrostructure and a microstructure). Thereby, the buffer region BR may have a reduced density, correspondingly, the buffer region BR may have an increased flexibility and a reduced stiffness, to thereby be adapted to reduce the dynamic load (or in other words, be adapted to improve the buffer performance of the stopping device, i.e., to reduce a dynamic load factor of the stopping device) when the first stopper 120 collides with the second stopper 140.

In an example, the second stopper 140 may include a buffer region BR and may be a separate member mounted to the mounting protrusions 32, and the first stopper 120 may not include a buffer region BR and may be a stopper integrally formed with the movable support structure 24.

The buffer region BR may have a meso-structure in a three-dimensional lattice form. In an example, the buffer region BR may have a meso-structure in a three-dimensional lattice form achieved by a three-dimensional printing process.

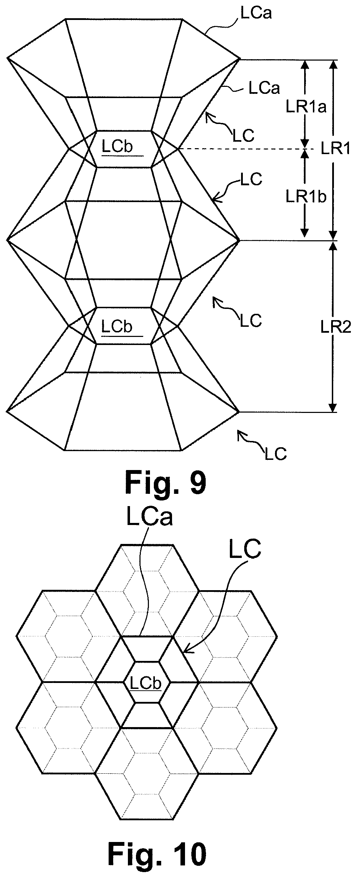

The buffer region BR may be configured to include multiple layers LR1, LR2 (see Fig. 9) having different meso-structures and arranged from a collision side CS to a base side BS (i.e., in a collision direction CD). Each layer includes multiple lattice cells, and each lattice cell includes multiple apexes and connecting rods or edges connecting respective apexes, reference may be made to the following description for details. The buffer region BR may be configured such that the closer a layer is to the collision side CS, the smaller the cross sectional dimension of the connecting rod (edge) of the lattice cell in that layer is. Thereby, the closer a layer is to the collision side CS, the smaller its appearance density is, the greater its flexibility is, and the smaller its stiffness is. Similarly, the buffer region BR may be configured such that the farther a layer is away from the collision side CS, the larger the cross sectional dimension of the connecting rod (edge) of the lattice cell in that layer is. Thereby, the farther a layer is away from the collision side CS, the greater its appearance density is, the smaller its flexibility is, and the greater its stiffness is.

The three-dimensional lattice may be formed by stacking multiple kinds or one single kind of polyhedral lattice cells having the same dimension or different dimensions. Here, it is to be noted that, in the three-dimensional lattice structure, the polyhedron of the lattice cell is an imaginary polyhedron (particularly, the faces of the lattice cell are imaginary faces, i.e., are actually empty), and a certain edge or face may be shared by two adjacent lattice cells.

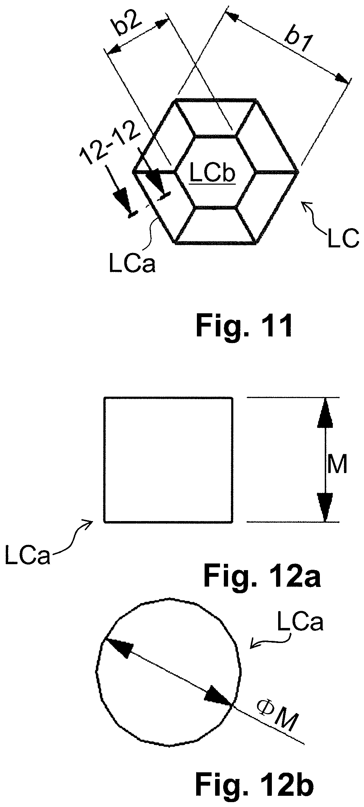

Referring to Figs. 9, 10, 11, 12a and 12b (Fig. 9 is a perspective view showing multiple lattice cells, arranged along the collision direction, of a first example of the lattice structure according to the present application, Fig. 10 is a top view showing the lattice structure constituted by multiple lattice cells shown in Fig. 9, Fig. 11 is a top view showing one lattice cell according of a first example of the lattice structure according to the present application, and Figs. 12a and 12b are respectively cross sectional views showing a connecting rod of the lattice cell according to the present application taken along line 12-12 shown in Fig. 11), in a first example of the lattice structure, the polyhedral lattice cell LC may include a truncated regular hexagonal pyramid. Particularly, each layer may include a first sub-layer LRla and a second sub-layer LRlb formed by arranging multiple truncated regular hexagonal pyramid lattice cells side by side, such that an imaginary small top face LCb of a truncated regular hexagonal pyramid lattice cell of the first sub-layer LRla is connected with an imaginary small top face LCb of a corresponding truncated regular hexagonal pyramid lattice cell of the second sub-layer LRlb (or in other words, the two truncated regular hexagonal pyramid lattice cells share one small top face LCb). By forming the lattice structure with the truncated regular hexagonal pyramid lattice cells in this way, a relatively stable meso-structure can be provided for the layers of the buffer region BR, and also the layers are allowed to easily have different expected densities one from another. In an example, a cross sectional dimension of a connecting rod of a lattice cell of the first layer LR1 of the lattice structure may be smaller than a cross sectional dimension of a connecting rod of a lattice cell of the second layer LR2 of the lattice structure. Or, a cross sectional dimension of a connecting rod of a lattice cell of the first sub-layer LRla of the lattice structure may be smaller than a cross sectional dimension of a connecting rod of a lattice cell of the second sub-layer LR1b.

In some examples, as shown in Fig. 12a, the cross section of the connecting rod (edge) LCa may be in a square shape or a substantially square shape, and in this case, the cross sectional dimension of the connecting rod LCa may be indicated by a side length M. In other examples, as shown in Fig. 12b, the cross section of the connecting rod LCa may be in a circular shape or a substantially circular shape, and in this case, the cross sectional dimension of the connecting rod LCa may be indicated by a diameter ØM. However, it may be appreciated that, the connecting rod LCa may also have other appropriate cross sectional shapes (for example, a triangular shape).

In an example, the buffer region BR may have a height H of 10mm. The buffer region BR may be divided into five layers, and each of the layers may have a height of 2mm and each of the layers includes two truncated regular hexagonal pyramid lattice cells in the collision direction CD (a height direction). For one truncated regular hexagonal pyramid lattice cell, a dimension b1 of a large top face of the truncated regular hexagonal pyramid may be 2mm (equal to the height of each layer), and a dimension b2 of the small top face LCb of the truncated regular hexagonal pyramid may be 1mm. Among the five layers, a cross sectional dimension M1 of the connecting rod LCa in the first layer closest to the collision side CS may be 0.2mm, and a cross sectional dimension M2 of the connecting rod LCa in the second layer secondly closer to the collision side CS may be 0.3mm, a cross sectional dimension M3 of the connecting rod LCa in the third layer thirdly closer to the collision side CS may be 0.4mm, a cross sectional dimension M4 of the connecting rod LCa in the fourth layer fourthly closer to the collision side CS may be 0.5mm, and a cross sectional dimension M5 of the connecting rod LCa in the fifth layer farthest away from the collision side CS may be 0.6mm. Here, it should be appreciated that, the dimension of the buffer region and the dimension of the lattice cells constituting the buffer region may also be other appropriate dimension values.

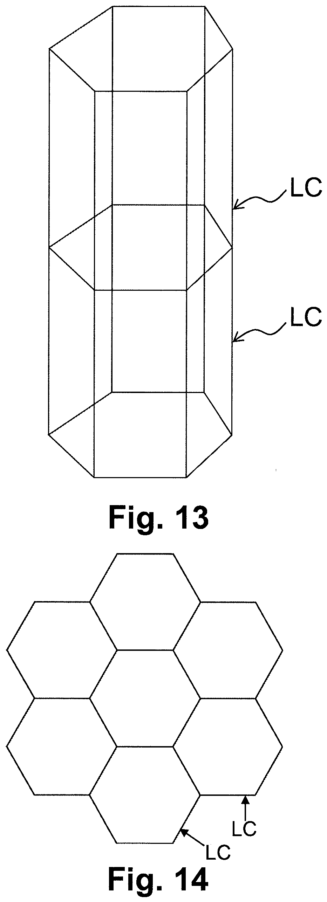

Referring to Figs. 13 and 14 (Figs. 13 and 14 are respectively a perspective view and a top view showing a second example of the lattice structure according to the present application), in a second example of the lattice structure, the polyhedral lattice cell LC may include a regular hexagonal prism.

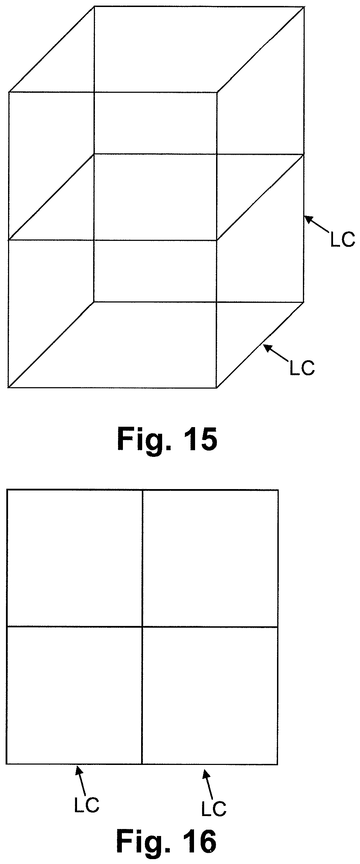

Referring to Figs. 15 and 16 (Figs. 15 and 16 are respectively a perspective view and a top view showing a third example of the lattice structure according to the present application), in a third example of the lattice structure, the polyhedral lattice cell LC may include a regular hexahedron.

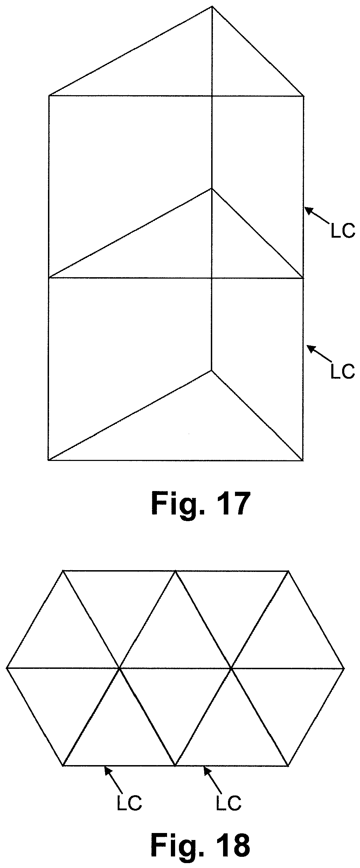

Referring to Figs. 17 and 18 (Figs. 17 and 18 are respectively a perspective view and a top view showing a fourth example of the lattice structure according to the present application), in a fourth example of the lattice structure, the polyhedral lattice cell LC may include a regular triangular prism.

In the second to fourth examples of the lattice structure, the lattice cells can achieve the so called tessellation in a two-dimensional plane and a three dimensional space, thereby allowing the meso-structure to be relatively regular so as to simplify the forming of the three-dimensional lattice structure.

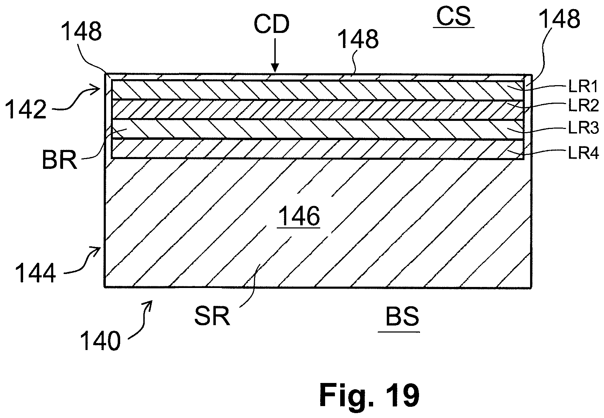

Referring to Fig. 19 (Fig. 19 is a cross sectional view showing a stopper according to an alternative embodiment of the present application taken along the collision direction), in an alternative embodiment, the buffer region BR may have a meso-structure in a three-dimensional porous form. In an example, the buffer region BR may have a meso-structure in a three-dimensional porous form achieved by a three-dimensional printing process or a metal powder or particle sintering process.

As shown in Fig. 19, the buffer region BR may be configured to include multiple layers LR1, LR2, LR3, LR4 having different meso-structures and arranged from the collision side CS to the base side BS (i.e., in the collision direction CD). The buffer region BR may be configured such that the closer a layer is to the collision side CS, the greater the porosity of that layer is (that layer is looser and more porous). Thereby, the closer a layer is to the collision side CS, the smaller the density of that layer is, the greater the flexibility of that layer is and the smaller the stiffness of that layer is.

According to the present application, by the layering way described above, the buffer region BR may be configured to allow its density to be increased step by step from the collision side CS to the base side BS (i.e., in the collision direction CD). Alternatively, the buffer region BR may be configured to allow its density to be substantially continuously increased from the collision side CS to the base side BS (i.e., in the collision direction CD).

Referring to Figs. 8 and 19, according to the present application, the second stopper 140 may further include a stiff region SR having a greater density (a normal region substantially solid with an unchanged density). The stiff region SR and the buffer region BR may be made of the same material. In this way, by modifying the meso-structure of a part of the stopper, it allows the stiff region and the buffer region to have different densities with a single material. Therefore, it can avoid the complexity of the manufacturing process caused by using multiple kinds of materials while improving the buffer performance of the stopping device.

The buffer region BR may be arranged at a collision side part 142 of the second stopper 140. The stiff region SR may include a stiff base 146 located at a base side part 144 of the second stopper 140 and a stiff wall 148 extending to the collision side part 142 so as to surround the buffer region BR. By arranging the buffer region BR at the collision side part 142, it may facilitate improvement of the buffer performance of the stopping device. In addition, by providing the thin stiff wall 148 surrounding the buffer region BR, it may avoid the material particles of the buffer region from separating and scattering into other parts of the flap assembly especially after a collision occurs while substantially not compromising the buffer performance.

The material making the second stopper 140 and/or the first stopper 120 may be aluminum alloy.

In summary, according to the present application, the buffer region is made in the stopper of the stopping device by modifying the meso-structure of the stopper, thus, a stopping device having an improved buffer performance can be simply and reliably formed, and thereby, the dynamic load factor of the stopping device can be advantageously reduced, and further the dynamic load of the stopping device in collision can be reduced. Particularly, by gradually increasing the density of the buffer region in the collision direction (the density is in ladder distribution), the dynamic load factor of the stopping device can be effectively reduced. In addition, making the buffer region in the stopper of the stopping device by modifying the meso-structure of the stopper can reduce the dimension and the weight of the stopper of the stopping device. In addition, since the buffer region having a density ladder (stepwise) distribution is made in the stopper of the stopping device by modifying the meso-structure of the stopper and the stopping device is further provided with a stiff region, the moving stroke (rotating angle) of the moving mechanism when opposing collision parts collide can be reduced while an improved buffer performance is provided, thereby achieving the so called stopping within a small space.

In a certain experiment, by providing the buffer region in the stopper formed by modifying the meso-structure of the stopper, the dynamic load factor may be reduced from about 1.7 to 1.2 by about 30%.

While the present application has been described with reference to the exemplary embodiment, it should be understood that the present application is not limited to the specific embodiments/examples described and illustrated in detail herein. The person skilled in the art can make various variants to the exemplary embodiment without departing from the scope defined by the claims.

## Claims

1. An aircraft (AC) comprising:
a moving mechanism (MM) comprising a moving airfoil and a drive connection structure (26);
a stationary structure (30); and
a stopping device (100) for the moving mechanism (MM),
the moving mechanism (MM) being connected to the stationary structure (30) so as to allow the moving mechanism (MM) to move relative to the stationary structure (30),
the stopping device (100) comprising a first stopper (120) provided at the moving mechanism (MM) and a second stopper (140) provided at the stationary structure (30);
the stopping device (100) is configured such that, when the drive connection structure (26) of the moving mechanism (MM) is normal, the first stopper (120) does not abut against the second stopper (140), **characterized in that** when the drive connection structure (26) fails, the first stopper (120) is adapted to abut against the second stopper (140) so as to limit a moving range of the moving mechanism (MM), and
at least one of the first stopper (120) and the second stopper (140) comprises a buffer region (BR) which is made by modifying its meso-structure and thus has a reduced density to thereby be adapted to reduce a dynamic load generated when the first stopper (120) collides with the second stopper (140).

2. The aircraft (AC) according to claim 1, wherein the buffer region (BR) has a meso-structure in a three-dimensional lattice form; and/or
the buffer region (BR) has a meso-structure in a three-dimensional porous form.

3. The aircraft (AC) according to claim 1 or claim 2, wherein the buffer region (BR) has a meso-structure in a three-dimensional lattice form achieved by a three-dimensional printing process; and/or
the buffer region (BR) has a meso-structure in a three-dimensional lattice formed by stacking polyhedral lattice cells (LC) which are of multiple kinds or of one single kind and which are identically sized or differently sized;
and preferably, the polyhedral lattice cell (LC) comprises a truncated regular or oblique hexagonal pyramid, a regular or oblique hexagonal prism, a regular or oblique triangular prism and a regular or oblique hexahedron.

4. The aircraft (AC) according to any preceding claim, wherein:
the buffer region (BR) is configured to comprise a plurality of layers (LR1, LR2) having different meso-structures and arranged from a collision side (CS) to a base side (BS), and
the closer a layer is to the collision side (CS), the smaller a cross sectional dimension of a connecting rod (LCa) of a lattice cell (LC) in the layer is.

5. The aircraft (AC) according to claim 4, wherein each of the layers comprises a first sub-layer (LR1a) and a second sub-layer (LR1b) formed by arranging a plurality of truncated regular or oblique hexagonal pyramid lattice cells side by side, such that an imaginary small top face (LCb) of a truncated regular or oblique hexagonal pyramid lattice cell of the first sub-layer is connected with an imaginary small top face (LCb) of a corresponding truncated regular or oblique hexagonal pyramid lattice cell of the second sub-layer or that an imaginary large top face of a truncated regular or oblique hexagonal pyramid lattice cell of the first sub-layer is connected with an imaginary large top face of a corresponding truncated regular or oblique hexagonal pyramid lattice cell of the second sub-layer.

6. The aircraft (AC) according to any preceding claim, wherein the buffer region (BR) has a meso-structure in a three-dimensional porous form achieved by a three-dimensional printing process or a metal powder or particle sintering process.

7. The aircraft (AC) according to any preceding claim, wherein:
the buffer region (BR) is configured to comprise a plurality of layers (LR1, LR2, LR3, LR4) having different meso-structures and arranged from a collision side (CS) to a base side (BS), and
the closer a layer is to the collision side (CS), the greater the porosity of the layer is.

8. The aircraft (AC) according to any preceding claim, wherein the buffer region (BR) is configured such that the density of the buffer region (BR) is increased step by step or substantially continuously from a collision side (CS) to a base side (BS); and/or
the buffer region (BR) is configured to comprise a plurality of layers (LR1, LR2) having different meso-structures and arranged from a collision side (CS) to a base side (BS), such that, the closer a layer is to the collision side (CS), the smaller the density of the layer is.

9. The aircraft (AC) according to any one of claims 1 to 8, wherein the at least one of the first stopper (120) and the second stopper (140) further comprises a stiff region (SR) having a greater density, and the stiff region (SR) and the buffer region (BR) are made of the same material.

10. The aircraft (AC) according to claim 9, wherein the buffer region (BR) is arranged at a collision side part (142) of the at least one of the first stopper (120) and the second stopper (140).

11. The aircraft (AC) according to claim 10, wherein the stiff region (SR) comprises a stiff base (146) located at a base side part (144) of the at least one of the first stopper (120) and the second stopper (140) and a stiff wall (148) extending to the collision side part (142) so as to surround the buffer region (BR).

12. The aircraft (AC) according to any preceding claim, wherein the moving mechanism (MM) is a flap assembly (20), and the flap assembly (20) comprises a flap body (22) and a movable support structure (24) configured to support the flap body (22).

13. The aircraft (AC) according to any preceding claim, wherein the stationary structure (30) comprises a mounting protrusion (32) of a wing rib of the aircraft (AC), and the first stopper (120) is provided at the movable support structure (24) and the second stopper (140) is provided at the mounting protrusion (32);
and preferably, the second stopper (140) is directly mounted to the mounting protrusion (32), or the second stopper (140) is mounted to a mounting bracket (34) bridging two adjacent mounting protrusions (32) so as to be indirectly mounted to the mounting protrusions (32).

## Patentansprüche

1. Luftfahrzeug (AC) umfassend:
einen Bewegungsmechanismus (MM), welcher eine bewegliche Tragfläche und eine Antriebsverbindungsstruktur (26) umfasst;
eine stationäre Struktur (30); und
eine Stoppvorrichtung (100) für den Bewegungsmechanismus (MM),
wobei der Bewegungsmechanismus (MM) mit der stationären Struktur (30) derart verbunden ist, dass der Bewegungsmechanismus (MM) sich relativ zu der stationären Struktur (30) bewegen kann,
wobei die Stoppvorrichtung (100) einen ersten Stopper (120), der an dem Bewegungsmechanismus (MM) vorgesehen ist, und einen zweiten Stopper (140), der an der stationären Struktur (30) vorgesehen ist, umfasst;
wobei die Stoppvorrichtung (100) derart ausgebildet ist, dass, wenn die Antriebsverbindungsstruktur (26) des Bewegungsmechanismus (MM) normal ist, der erste Stopper (120) nicht gegen den zweiten Stopper (140) stößt, **dadurch gekennzeichnet,**
**dass**, wenn die Antriebsverbindungsstruktur (26) versagt, der erste Stopper (120) derart angepasst ist, dass er gegen den zweiten Stopper (140) stößt, um so einen Bewegungsbereich des Bewegungsmechanismus (MM) zu begrenzen, und
wenigstens der erste Stopper (120) oder der zweite Stopper (140) einen Pufferbereich (BR) umfasst, welcher durch Modifizieren seiner Mesostruktur hergestellt ist und somit eine reduzierte Dichte aufweist, um dadurch angepasst zu werden, eine dynamische Last zu reduzieren, die erzeugt wird, wenn der erste Stopper (120) mit dem zweiten Stopper (140) kollidiert.

2. Luftfahrzeug (AC) nach Anspruch 1, wobei der Pufferbereich (BR) eine Mesostruktur in einer dreidimensionalen Gitterform aufweist; und/oder
der Pufferbereich (BR) eine Mesostruktur in einer dreidimensionalen porösen Form aufweist.

3. Luftfahrzeug (AC) nach Anspruch 1 oder Anspruch 2, wobei der Pufferbereich (BR) eine Mesostruktur in einer dreidimensionalen Gitterform aufweist, die durch ein dreidimensionales Druckverfahren erreicht wird, und/oder
der Pufferbereich (BR) eine Mesostruktur in einem dreidimensionalen Gitter aufweist, das durch das Stapeln von polyedrischen Gitterzellen (LC) gebildet wird, welche von mehreren Arten oder einer einzigen Art sind und welche gleich groß oder unterschiedlich groß sind;
und vorzugsweise die polyedrische Gitterzelle (LC) eine abgestumpfte reguläre oder schräge hexagonale Pyramide, ein reguläres oder schräges hexagonales Prisma, ein reguläres oder schräges dreieckiges Prisma und ein reguläres oder schräges Hexaeder umfasst.

4. Luftfahrzeug (AC) nach einem der vorhergehenden Ansprüche, wobei:
der Pufferbereich (BR) ausgebildet ist, eine Vielzahl von Schichten (LR1, LR2) mit unterschiedlichen Mesostrukturen zu umfassen, die von einer Kollisionsseite (CS) zu einer Basisseite (BS) angeordnet sind, und
je näher eine Schicht an der Kollisionsseite (CS) liegt, desto kleiner ist die Querschnittsabmessung eines Pleuels (LCa) einer Gitterzelle (LC) in der Schicht.

5. Luftfahrzeug (AC) nach Anspruch 4, wobei jede der Schichten eine erste Unterschicht (LR1a) und eine zweite Unterschicht (LR1b) umfasst, die durch das Anordnen einer Vielzahl von Gitterzellen mit abgestumpften regelmäßigen oder schrägen hexagonalen Pyramiden nebeneinander gebildet werden, sodass eine imaginäre kleine obere Fläche (LCb) einer Gitterzelle mit abgestumpfter regelmäßiger oder schräger hexagonaler Pyramide der ersten Unterschicht mit einer imaginären kleinen oberen Fläche (LCb) einer entsprechenden Gitterzelle mit abgestumpfter regelmäßiger oder schräger hexagonaler Pyramide der zweiten Unterschicht verbunden ist oder dass eine imaginäre große obere Fläche einer Gitterzelle mit abgestumpfter regelmäßiger oder schräger hexagonaler Pyramide der ersten Unterschicht mit einer imaginären großen oberen Fläche einer entsprechenden Gitterzelle mit abgestumpfter regelmäßiger oder schräger hexagonaler Pyramide der zweiten Unterschicht verbunden ist.

6. Luftfahrzeug (AC) nach einem der vorhergehenden Ansprüche, wobei der Pufferbereich (BR) eine Mesostruktur in einer dreidimensionalen porösen Form aufweist, die durch ein dreidimensionales Druckverfahren oder ein Metallpulver- oder Partikelsinterverfahren erreicht wird.

7. Luftfahrzeug (AC) nach einem der vorhergehenden Ansprüche, wobei:
der Pufferbereich (BR) ausgebildet ist, eine Vielzahl von Schichten (LR1, LR2, LR3, LR4) zu umfassen, die unterschiedliche Mesostrukturen aufweisen und von einer Kollisionsseite (CS) zu einer Basisseite (BS) angeordnet sind, und
je näher eine Schicht an der Kollisionsseite (CS) liegt, desto größer ist die Porosität der Schicht.

8. Luftfahrzeug (AC) nach einem der vorhergehenden Ansprüche, wobei der Pufferbereich (BR) derart ausgebildet ist, dass die Dichte des Pufferbereichs (BR) schrittweise oder im Wesentlichen kontinuierlich von einer Kollisionsseite (CS) zu einer Basisseite (BS) erhöht wird, und/oder
der Pufferbereich (BR) ausgebildet ist, eine Vielzahl von Schichten (LR1, LR2) zu umfassen, die unterschiedliche Mesostrukturen aufweisen und von einer Kollisionsseite (CS) zu einer Basisseite (BS) angeordnet sind, sodass die Dichte der Schicht umso geringer ist, je näher eine Schicht an der Kollisionsseite (CS) liegt.

9. Luftfahrzeug (AC) nach einem der Ansprüche 1 bis 8, wobei der erste Stopper (120) und/oder der zweite Stopper (140) ferner einen steifen Bereich (SR) mit einer größeren Dichte aufweist und der steife Bereich (SR) und der Pufferbereich (BR) aus dem gleichen Material hergestellt sind.

10. Luftfahrzeug (AC) nach Anspruch 9, wobei der Pufferbereich (BR) an einem kollisionsseitigen Teil (142) des ersten Stoppers (120) und/oder des zweiten Stoppers (140) angeordnet ist.

11. Luftfahrzeug (AC) nach Anspruch 10, wobei der steife Bereich (SR) eine steife Basis (146), die an einem basisseitigen Teil (144) des ersten Stoppers (120) und/oder des zweiten Stoppers (140) angeordnet ist, und eine steife Wand (148) umfasst, die sich zu dem kollisionsseitigen Teil (142) erstreckt, um den Pufferbereich (BR) zu umgeben.

12. Luftfahrzeug (AC) nach einem der vorhergehenden Ansprüche, wobei der Bewegungsmechanismus (MM) eine Klappenanordnung (20) ist und die Klappenanordnung (20) einen Klappenkörper (22) und eine bewegliche Stützstruktur (24) aufweist, die ausgebildet ist, den Klappenkörper (22) zu stützen.

13. Luftfahrzeug (AC) nach einem der vorhergehenden Ansprüche, wobei die stationäre Struktur (30) einen Befestigungsvorsprung (32) einer Flügelrippe des Luftfahrzeugs (AC) umfasst und der erste Stopper (120) an der beweglichen Stützstruktur (24) und der zweite Stopper (140) am Befestigungsvorsprung (32) vorgesehen ist;
und vorzugsweise der zweite Stopper (140) direkt an dem Montagevorsprung montiert ist, oder der zweite Stopper (140) an einer Montagehalterung (34) montiert ist, die zwei benachbarte Montagevorsprünge (32) überbrückt, um indirekt an den Montagevorsprüngen (32) montiert zu sein.

## Revendications

1. Aéronef (AC) comprenant :
un mécanisme de déplacement (MM) comprenant une surface portante mobile et une structure de raccordement d'entraînement (26) ;
une structure fixe (30) ; et
un dispositif d'arrêt (100) pour le mécanisme de déplacement (MM),
le mécanisme de déplacement (MM) étant raccordé à la structure fixe (30) afin de permettre au mécanisme de déplacement (MM) de se déplacer par rapport à la structure fixe (30), le dispositif d'arrêt (100) comprenant une première butée (120) prévue au niveau du mécanisme de déplacement (MM) et une seconde butée (140) prévue au niveau de la structure fixe (30) ;
le dispositif d'arrêt (100) est configuré de sorte que, lorsque la structure de raccordement d'entraînement (26) du mécanisme de déplacement (MM) est normale, la première butée (120) ne vient pas en butée contre la seconde butée (140), **caractérisé en ce que** :
lorsque la structure de raccordement d'entraînement (26) présente des défaillances, la première butée (120) est adaptée pour venir en butée contre la seconde butée (140) afin de limiter une plage de déplacement du mécanisme de déplacement (MM), et
au moins l'une parmi la première butée (120) et la seconde butée (140) comprend une région tampon (BR) qui est réalisée en modifiant sa mésostructure et a donc une densité réduite afin d'être ainsi adaptée pour réduire une charge dynamique générée lorsque la première butée (120) entre en collision avec la seconde butée (140).

2. Aéronef (AC) selon la revendication 1, dans lequel la région tampon (BR) a une mésostructure se présentant sous une forme de treillis en trois dimensions ; et/ou
la région tampon (BR) a une mésostructure se présentant sous une forme poreuse tridimensionnelle.

3. Aéronef (AC) selon la revendication 1 ou la revendication 2, dans lequel la région tampon (BR) a une mésostructure se présentant sous une forme de treillis en trois dimensions, obtenue par un procédé d'impression en trois dimensions ; et/ou
la région tampon (BR) a une mésostructure sous une forme de treillis en trois dimensions formé en empilant des cellules de treillis polyèdre (LC) qui sont de plusieurs types ou d'un seul type et qui sont dimensionnées de manière identique ou différemment ;
et de préférence la cellule de treillis polyèdre (LC) comprend une pyramide hexagonale régulière ou oblique tronquée, un prisme hexagonal régulier ou oblique, un prisme triangulaire régulier ou oblique et un hexaèdre régulier ou oblique.

4. Aéronef (AC) selon l'une quelconque des revendications précédentes, dans lequel :
la région tampon (BR) est configurée pour comprendre une pluralité de couches (LR1, LR2) ayant des mésostructures différentes et agencées d'un côté de collision (CS) jusqu'à un côté de base (BS), et
plus une couche est proche du côté de collision (CS), plus une dimension transversale d'une tige de raccordement (LCa) d'une cellule de treillis (LC) dans la couche est petite.

5. Aéronef (AC) selon la revendication 4, dans lequel chacune des couches comprend une première sous-couche (LR1a) et une seconde sous-couche (LR1b) formées en agençant une pluralité de cellules de treillis de pyramide hexagonale régulière ou oblique tronquée côte à côte, de sorte qu'une petite face supérieure imaginaire (LCb) d'une cellule de treillis de pyramide hexagonale régulière ou oblique tronquée de la première sous-couche est raccordée avec une petite face supérieure imaginaire (LCb) d'une cellule de treillis de pyramide hexagonale régulière ou oblique tronquée correspondante de la seconde sous-couche ou qu'une grande face supérieure imaginaire d'une cellule de treillis de pyramide hexagonale régulière ou oblique tronquée de la première sous-couche est raccordée avec une grande face supérieure imaginaire d'une cellule de treillis de pyramide hexagonale régulière ou oblique tronquée correspondante de la seconde sous-couche.

6. Aéronef (AC) selon l'une quelconque des revendications précédentes, dans lequel la région tampon (BR) a une mésostructure se présentant sous une forme poreuse tridimensionnelle, obtenue par un procédé d'impression en trois dimensions ou un procédé de frittage de poudre métallique ou de particules.

7. Aéronef (AC) selon l'une quelconque des revendications précédentes, dans lequel :
la région tampon (BR) est configurée pour comprendre une pluralité de couches (LR1, LR2, LR3, LR4) ayant différentes mésostructures et agencées à partir d'un côté de collision (CS) jusqu'à un côté de base (BS), et
plus une couche est proche du côté de collision (CS), plus la porosité de la couche est importante.

8. Aéronef (AC) selon l'une quelconque des revendications précédentes, dans lequel la région tampon (BR) est configurée de sorte que la densité de la région tampon (BR) est augmentée pas à pas ou de manière sensiblement continue d'un côté de collision (CS) à un côté de base (BS) ; et/ou
la région tampon (BR) est configurée pour comprendre une pluralité de couches (LR1, LR2) ayant différentes mésostructures et agencées d'un côté de collision (CS) jusqu'à un côté de base (BS) de sorte que plus une couche est proche du côté de collision (CS), plus la densité de la couche est faible.

9. Aéronef (AC) selon l'une quelconque des revendications 1 à 8, dans lequel la au moins une parmi la première butée (120) et la seconde butée (140) comprend en outre une région rigide (SR) ayant une densité plus importante, et la région rigide (SR) et la région tampon (BR) sont réalisées avec le même matériau.

10. Aéronef (AC) selon la revendication 9, dans lequel la région tampon (BR) est agencée au niveau d'une partie du côté de la collision (142) d'au moins l'une parmi la première butée (120) et la seconde butée (140).

11. Aéronef (AC) selon la revendication 10, dans lequel la région rigide (SR) comprend une base rigide (146) positionnée au niveau d'une partie du côté de base (144) d'au moins l'une parmi la première butée (120) et la seconde butée (140) et une paroi rigide (148) s'étendant vers la partie du côté de collision (142) afin d'entourer la région tampon (BR).

12. Aéronef (AC) selon l'une quelconque des revendications précédentes, dans lequel le mécanisme de déplacement (MM) est un ensemble de volet (20), et l'ensemble de volet (20) comprend un corps de volet (22) et une structure de support mobile (24) configurée pour supporter le corps de volet (22).

13. Aéronef (AC) selon l'une quelconque des revendications précédentes, dans lequel la structure fixe (30) comprend une saillie de montage (32) d'une nervure de volet de l'aéronef (AC) et la première butée (120) est prévue au niveau de la structure de support mobile (24) et la seconde butée (140) est prévue au niveau de la saillie de montage (32) ;
et de préférence la seconde butée (140) est directement montée sur la saillie de montage (32) ou la seconde butée (140) est montée sur une console de montage (34) faisant le pont entre deux saillies de montage (32) adjacentes afin d'être indirectement montée sur les saillies de montage (32).
